# FASCICULE DE BREVET EUROPEEN

(11) **EP 0 777 064 B1**
(45) Date de publication et mention de la délivrance du brevet: **14.11.2001**
(21) Numéro de dépôt: 96460039.9
(22) Date de dépôt: 28.11.1996
(51) Int. Cl.: F16F 7/12, B60R 22/28, F16G 11/03

(54) **Dispositif limiteur d'effort en traction**
Zugkraftbegrenzungs-Vorrichtung
Traction load limiting device

(30) Priorité: 30.11.1995 FR 9514463
(43) Date de publication de la demande: 04.06.1997
(73) Titulaire: AUTOMOBILES PEUGEOT, 75116 Paris (FR); AUTOMOBILES CITROEN, 92200 Neuilly-sur-Seine (FR)
(72) Inventeur: Faidy, Jean-Pierre, 92410 Ville d'Avray (FR)
(74) Mandataire: Le Faou, Daniel

(56) Documents cités:
- EP-A- 0 502 755
- EP-A- 0 652 388
- FR-A- 2 101 292
- FR-A- 2 119 414
- US-A- 2 947 353
- US-A- 3 829 122

## Description

La présente invention concerne un dispositif limiteur d'effort en traction, et plus particulièrement un dispositif apte à se déplier progressivement lorsqu'on lui applique en sa zone centrale un effort axial, ou approximativement axial, qui dépasse un seuil déterminé.

Cette invention a été initialement conçue dans une application se rapportant à la protection des occupants d'un véhicule, et en particulier d'un véhicule automobile, en cas de choc frontal ; dans cette application, le dispositif est destiné à équiper une ceinture de sécurité.

Toutefois, ce dispositif peut être utilisé dans différentes autres applications, lorsqu'il s'agit d'apporter sur une ligne d'effort un élément de sécurité qui limite la force transitant sur cette ligne.

C'est notamment le cas sur des organes d'attelage tels que des tirants ou des câbles, lorsqu'on souhaite limiter les chocs d'attelage susceptibles, dans certaines conditions exceptionnelles d'être très violents, et de causer des dommages au mobile tracteur et/ou au mobile tracté.

Il est établi depuis longtemps que si on limite la tension dans la sangle d'une ceinture de sécurité au cours d'une collision frontale, on garantit un supplément de protection puisque l'effort de compression de la cage thoracique peut de ce fait être contrôlé et être ajusté à une valeur qui ne dépasse pas la limite tolérable par un être humain de morphologie moyenne, limite correspondant notamment à la brisure des côtes.

Parmi les dispositifs connus, on citera un dispositif fondé sur une rupture programmée des coutures de la sangle, initialement cousue sur elle-même, ce qui libère progressivement de la longueur de sangle tout en absorbant de l'énergie à un niveau d'effort à peu près constant.

Ce système connu présente l'inconvénient qu'il faut disposer d'une sangle de configuration très particulière ; de plus les coutures formées dans des plis de la sangle forment des surépaisseurs gênantes pour le confort de l'usager.

Il a également été proposé un dispositif qui met en oeuvre le déchirement d'une pièce en tôle au niveau de la fixation de l'enrouleur sur le longeron de caisse.

L'utilisation de ce dispositif est limité à un emplacement particulier et il n'est donc pas adapté à un montage en des endroits quelconques du véhicule, notamment pour équiper les ceintures de sécurité arrières.

De plus, le système ne fonctionne correctement que sous l'effet d'une traction purement axiale pour laquelle il est conçu ; lorsque les efforts encaissés par la sangle sont multidirectionnels - ce qui est souvent le cas, lors d'un choc du véhicule - le bon fonctionnement du système peut s'en trouver compromis.

C'est pourquoi la présente invention se propose de résoudre ces difficultés, grâce à un dispositif compact et polyvalent, c'est-à-dire pouvant s'installer pratiquement en tout point d'une ceinture de sécurité et/ou de sa zone d'attache à la caisse du véhicule, aussi bien à l'avant et à l'arrière, ce dispositif étant néanmoins compact et d'un prix de revient modéré.

Un autre objectif de l'invention est de proposer un dispositif qui puisse être ajouté (comme accessoire optionnel) à des ceintures de sécurité déjà en place, sans modification de celles-ci.

Enfin, le dispositif selon l'invention trouve application dans différents domaines autres que celui des ceintures de sécurité, et en particulier dans des attelages ou des transmissions similaires, dans lesquels on souhaite éviter l'apparition d'efforts trop élevés, et en particulier de chocs très violents.

Comme déjà dit, le dispositif qui fait l'objet de l'invention est susceptible de se déplier progressivement lorsqu'on lui applique en sa zone centrale un effort axial, ou approximativement axial, dépassant un seuil déterminé.

Par le document US-A-2 947 353 (cf. figure 18) on connaît un dispositif limiteur d'effort en traction, équipant une ceinture de sécurité ; ce dispositif, qui peut se déplier progressivement lorsqu'on lui applique en sa zone centrale un effort axial dépassant un seuil déterminé, comporte une pièce plate et déformable, formée d'une succession d'ondulations.

Conformément à la présente invention, ces ondulations sont concentriques ou approximativement concentriques, et entourent la zone centrale de la pièce plate et déformable.

Ainsi, lorsque l'effort appliqué sur la zone centrale dépasse la valeur seuil, on obtient un dépliement successif des différentes ondulations, s'accompagnant d'un déplacement axial, ou approximativement axial, de la zone centrale, et corrélativement un allongement axial du dispositif.

Grâce à cet agencement, le dépliement est obtenu même si la direction de l'effort est inclinée par rapport à l'axe du dispositif, si bien que le bon fonctionnement de celui-ci n'est pas compromis lorsque la force appliquée a une composante transversale plus ou moins importante.

Le dispositif est donc particulièrement bien adapté à l'équipement d'une ceinture de sécurité, qui doit travailler non seulement dans le cas de chocs purement frontaux, mais également dans le cas d'efforts multidirectionnels, à direction variable.

Par ailleurs, selon un certain nombre de caractéristiques avantageuses, et non limitatives de l'invention :
- les ondulations sont centrées sur un axe - dit de traction - ;
- ladite pièce est fixée à une embase perpendiculaire à l'axe de traction ;
- il comporte des moyens de fixation de l'embase à un support ;
- lesdits moyens autorisent la libre rotation de l'embase autour de l'axe de traction ;
- il comporte un organe transmetteur d'effort solidaire de la zone centrale ;
- ladite pièce déformable est en métal embouti, par exemple en acier ;
- les ondulations ont des parois évasées, par exemple tronconiques, dont le sens d'évasement axial est alterné d'une paroi à la paroi voisine ;
- lesdites ondulations ont un contour circulaire ;
- lesdites ondulations ont un contour ovale ;
- lesdites ondulations ont un contour polygonal ;
- ladite pièce déformable est noyée extérieurement dans un matériau souple, par exemple en mousse synthétique.

Dans un mode de réalisation possible, le dispositif est constitué de deux dispositifs tels que décrits plus haut, munis d'une embase, et qui sont fixés l'un à l'autre, dos-à-dos, par leurs embases.

Dans une application possible, le dispositif est utilisé pour équiper la ceinture de sécurité d'un véhicule, notamment automobile.

De préférence, dans cette application, il comporte une embase par laquelle il est fixé sur un montant de la carrosserie du véhicule, tandis que l'élément de renvoi de sangle est fixé à ladite zone centrale de la pièce déformable.

Dans un autre mode de montage possible, le dispositif équipe la boucle, dont le pédoncule est fixé à la zone centrale de la pièce déformable tandis que son embase est fixée au plancher du véhicule ou toute autre partie basse telle que le tunnel pour les places avant, ou au fond de la banquette pour les places arrière.

Ainsi, il est placé entre le point d'ancrage bas et la partie femelle de la boucle.

Enfin, dans une autre application, le dispositif est destiné à être monté sur un organe d'attelage, tel qu'un câble, ou un tirant.

D'autres caractéristiques et avantages de l'invention apparaîtront de la description et des dessins annexés qui en représentent, à titre d'exemples non limitatifs, des modes de réalisation préférentiels.

Sur ces dessins :
- la figure 1 représente schématiquement, et partiellement, en coupe transversale, la caisse d'un véhicule automobile, cette vue représentant le conducteur attaché sur son siège à l'aide d'une ceinture de sécurité équipée d'un dispositif conforme à l'invention.
- la figure 2 est une vue en perspective montrant le dispositif fixé sur le montant latéral du véhicule, ainsi que l'élément de renvoi de la sangle destiné à être fixé au dispositif ;
- la figure 3 est une vue en coupe axiale d'un premier mode de réalisation possible du dispositif selon l'invention ;
- la figure 4 est une vue schématique du dispositif de la figure 3, sur lequel est appliquée une force **F** dont l'intensité est supérieure au seuil de déformation ;
- les figures 4A, 4B et 4C sont des vues similaires à la figure 4 illustrant différentes étapes de la déformation du dispositif sous l'effet de la force **F** ;
- la figure 5 est une vue similaire à la figure 4C représentant le dispositif lorsqu'il a été soumis à une force **G** qui n'est pas purement axiale, mais au contraire possède une composante transversale ;
- la figure 6 est une vue schématique d'un dispositif double (formé de deux parties accolées et fixées dos-à-dos), ce dispositif équipant un câble de traction ;
- la figure 6A est une vue similaire à la figure 6, qui montre le dispositif après déformation ;
- les figures 7 et 8 sont des demi-vues, en coupe axiale, de deux variantes du dispositif ;
- la figure 9 est une vue en coupe axiale montrant un dispositif conforme à l'invention, enrobé dans un matériau d'habillage extérieur.

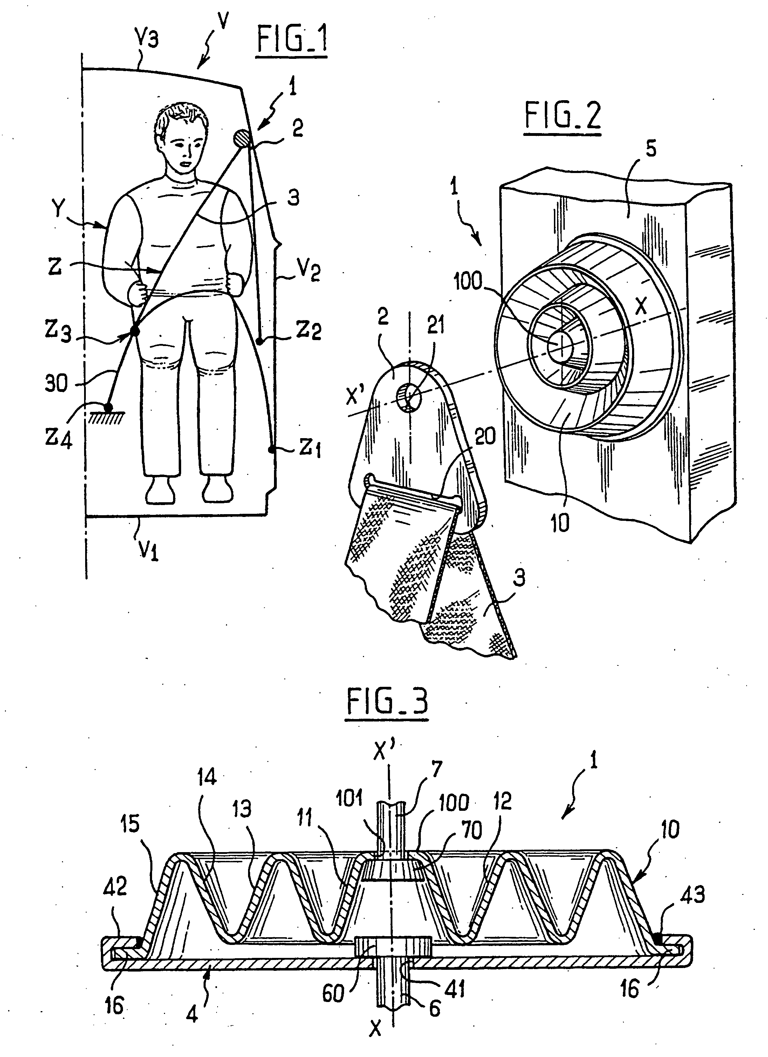

Sur la figure 1, on a représenté la caisse **V** d'un véhicule automobile, en coupe transversale.

Il s'agit d'une vue partielle, montrant le côté du véhicule où est placé le conducteur **Y**, celui-ci étant installé sur son siège (non représenté) et retenu de manière usuelle par une ceinture à enrouleur **Z.**

On a désigné par la référence **V**₁ le plancher du véhicule, par la référence **V**₂ la paroi latérale (pourvue d'une portière) et parla référence **V**₃ le toit.

La ceinture **Z** comporte une sangle 3 qui, de manière connue, est attachée en un point d'ancrage bas **Z**₁, passe - avec possibilité de coulissement - dans une boucle d'attache **Z**₃, puis passe dans un élément de renvoi 2 fixé sur un montant latéral de la carrosserie du véhicule, pour redescendre ensuite jusqu'à un enrouleur **Z**₂.

La boucle est maintenue, par un système d'encliquetage facilement déverrouillable, à un lien souple 30, par exemple un câble, fixé en un point d'ancrage bas **Z**₄ situé dans la partie centrale du véhicule.

Un tel agencement est bien connu.

Selon l'invention, cette ceinture est équipée d'un dispositif de limitation d'effort en traction, référencé 1, qui est associé à l'élément de renvoi 2.

Comme on le voit à la figure 2, l'élément 1 comporte une pièce 10 - dite pièce déformable - ayant la forme générale d'un palet cylindrique de faible hauteur, dont la paroi est formée d'une série d'ondulations concentriques tronconiques, à conicité alternée d'une paroi à la paroi voisine.

Le dispositif a une forme de révolution, d'axe **XX**' sur lequel sont centrées les différentes ondulations.

L'ondulation centrale possède une face plane circulaire, perpendiculaire à **XX',** référencée 100

Cet axe sera conventionnellement désigné dans la suite de la description, et dans les revendications, par "axe de traction".

Le dispositif 1 est fixé au montant latéral 5 de la carrosserie, par l'intermédiaire de son embase, visible sur la figure 3.

La sangle 3 passe dans un élément de renvoi 2 de type usuel ; il s'agit d'une plaque métallique percée d'un trou 21 pour le passage d'un organe de fixation, tel qu'une vis ou un boulon ; l'élément 2 présente une fente 20 servant au passage et au renvoi, avec possibilité de coulissement, de la sangle 3.

Conformément à l'invention, au lieu d'être fixé directement au montant 5, l'élément de renvoi 2 est fixé à la zone centrale 100 du dispositif 1.

La figure 3 permet de comprendre la configuration des ondulations, qui dans l'exemple illustré, ont une section en forme de "V" à angle arrondi, divergeant alternativement dans un sens ou dans l'autre selon **XX**'.

A titre indicatif, l'angle au sommet du "V" est de l'ordre de 35 à 55°.

On a désigné les parois des différents replis par les références 11, 12, 13, 14 et 15 si on se dirige de la zone centrale 100 vers la périphérie de la pièce 10.

Comme déjà dit, cette dernière est fixée à une embase 4.

Dans l'exemple illustré, la pièce 1 est une pièce métallique, de préférence en acier, réalisée par emboutissage entre un poinçon et une matrice ayant une forme complémentaire des ondulations.

Le rebord de la pièce, référencé 16, dont le plan est perpendiculaire à **XX',** sert à la fixation de la pièce 1 à l'embase 4. Cette dernière est un disque métallique, également en acier, dont le bord 42 est serti sur le rebord 16, l'assemblage pouvant être complété par une ligne de soudure périphérique 43.

Bien entendu, cet exemple de fixation mutuelle des pièces 10 et 4 n'est qu'un exemple possible, différents autres modes d'assemblage pouvant être prévus.

Dans sa partie centrale, la plaque de fond 4, ou embase, présente un orifice circulaire 41, d'axe **XX**'.

Un élément d'ancrage tel qu'une tige 6 pourvue d'une tête 60 traverse l'ouverture 41 pour permettre la fixation du dispositif sur le montant 5.

A cet effet, la tige 6 possède par exemple une extrémité filetée apte à recevoir un écrou de fixation.

De manière similaire, la zone centrale 100 de la pièce déformable 10 présente une ouverture 101 dans laquelle passe un organe de traction consistant en une tige 7 pourvue d'une tête 70.

La tige 7 est destinée à traverser l'ouverture 21 de l'élément de renvoi 2 ; l'extrémité de la tige 7 peut être filetée pour recevoir un écrou de fixation.

Après montage, le dispositif peut tourner librement sur l'axe 6, qui joue le rôle d'un pivot.

Cette liberté de pivotement permet à la sangle de prendre la position voulue, qui dépend de la morphologie de l'utilisateur.

En l'absence d'une sollicitation importante sur la tige 7, la pièce 1 conserve l'état illustré sur les figures 2 et 3, dans lequel elle a une forme plate.

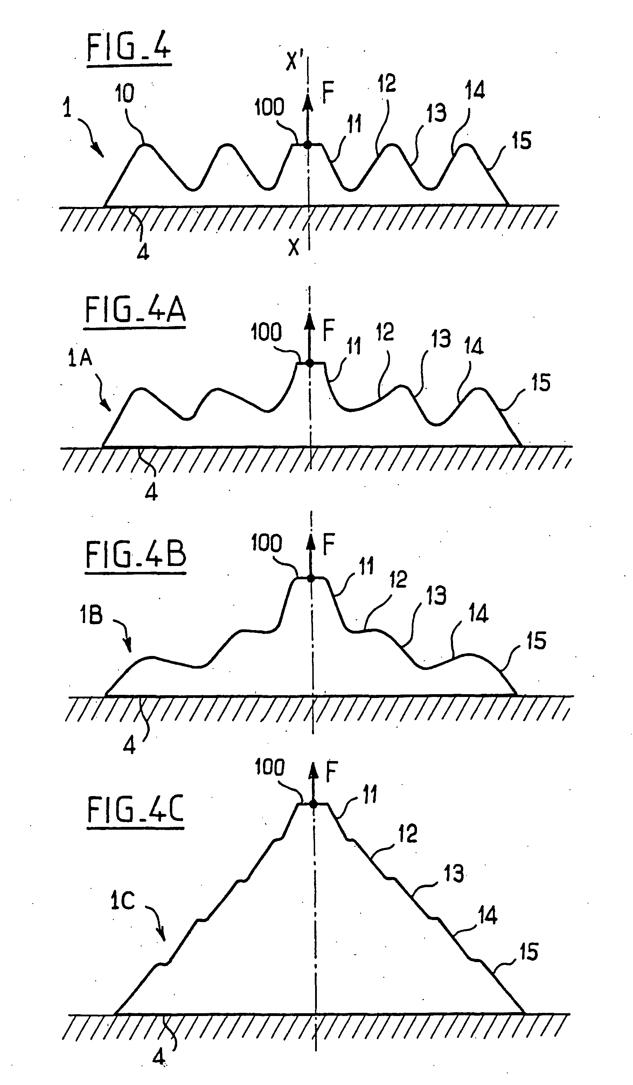

S'il se produit un effort très violent sur la sangle, ce qui est le cas notamment à la suite d'un choc frontal du véhicule, on va observer une déformation contrôlée de la pièce 10, déformation illustrée aux figures 4, 4A, 4B et 4C.

Cette déformation se fait par dépliements successifs des différentes ondulations 11, 12, 13, 14 et 15, avec absorption d'énergie cinétique.

Par ailleurs, le déplacement qui en résulte pour la zone centrale 100 conduit à un déplacement du point d'ancrage haut vers l'avant, ce qui libère un supplément de trajectoire pour la personne retenue dans la ceinture de sécurité, et réduit donc la sévérité du choc ressenti.

Le dispositif permet, en plus de sa fonction de limiteur d'effort, un positionnement géométrique du renvoi dans l'espace adapté au sens de l'effort imposé par la sangle, et qui est variable au cours du choc.

Il peut de ce fait éviter certains problèmes de bourrage souvent constatés avec les renvois de sangles traditionnels, et qui ont pour origine une orientation imposée et invariable du renvoi, lequel ne peut se mouvoir qu'en rotation dans son plan d'origine.

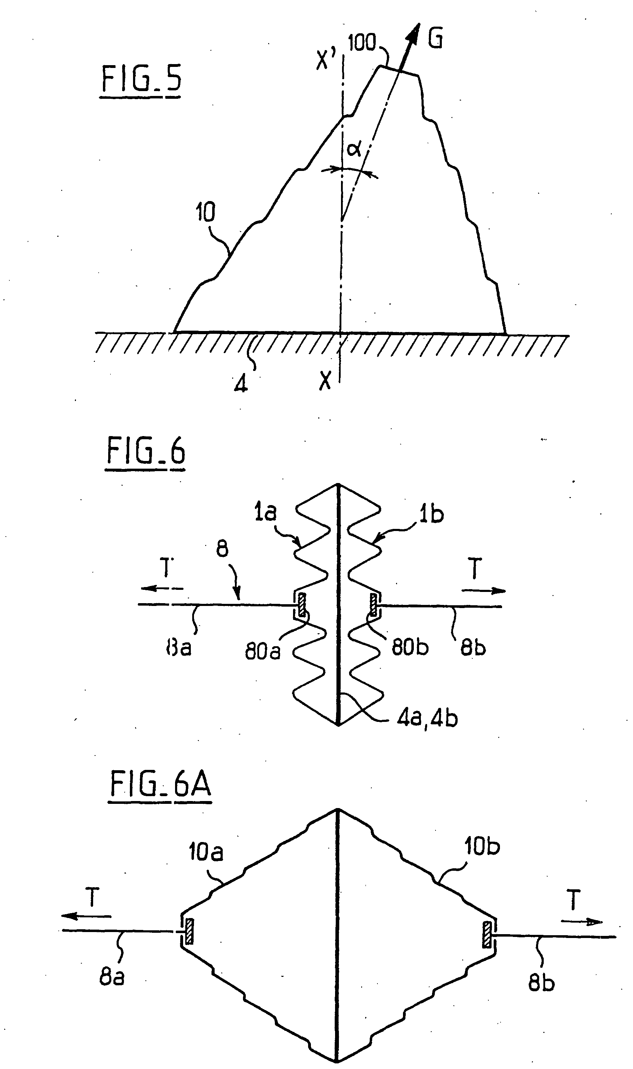

Le dispositif se déforme également en cas d'application d'un choc non purement axial, comme cela est illustré sur la figure 5 ; dans l'exemple illustré l'effort appliqué **G** forme un angle α avec **X X'.**

Il en résulte une déformation dissymétrique de la pièce 10, qui néanmoins remplit sa fonction convenablement.

Il va de soi qu'on choisira les dimensions des différents éléments constitutifs du dispositif, et notamment l'épaisseur des parois de la pièce 1, de telle manière que la déformation n'intervienne qu'au delà d'un effort très violent, qui ne se rencontre pas dans les conditions de conduite usuelles, mais seulement à la suite d'un accident ; ces dimens ons, ainsi que la résistance mécanique des éléments, seront choisies pour qu'on ait une absorption d'énergie suffisante, tout en ayant une amplitude de déformation limitée, pour éviter notamment que le déplacement de l'occupant ne soit trop important vers l'avant ; en effet, s'il s'agit du conducteur, il risquerait d'être projeté contre le volant.

A titre indicatif, dans le mode de réalisation de la figure 3, l'embase 4 a un diamètre de l'ordre de 60 à 70 mm, une hauteur de l'ordre de 15 à 20 mm, et une épaisseur de tôle en acier (aussi bien pour la pièce 10 que l'embase 4) comprise entre 0,5 et 2,5 mm.

Le déplacement axial de la zone 100 est alors de l'ordre de 40 mm.

Différentes variantes peuvent être prévues ; ainsi le dispositif peut avoir une embase et des ondulations à contour non circulaire, mais ovale, voire polygonal ou autre ; les formes seront choisies pour limiter l'encombrement et/ou optimiser le travail du dispositif.

Dans un mode de réalisation illustré sur les figures 6 et 6A, on a affaire à un dispositif double équipant un organe de traction 8, par exemple un câble.

Le dispositif est composé de deux dispositifs 1a, 1b, similaires à celui de la figure 3, et qui sont reliés l'un à l'autre dos-à-dos par leur embase 4a, respectivement 4b.

Les deux embases sont par exemple soudées et/ou serties l'une à l'autre.

Le câble 8 est formé de deux tronçons 8a, 8b, ayant chacun une extrémité élargie - en forme de tête - 80a, 80b solidaire des zones centrales 100, les parties 80 jouant le même rôle que les parties 70 du mode de réalisation de la figure 3.

En cas de traction excessive **T** sur le câble, notamment à la suite d'un choc violent et intempestif, on observe une déformation des deux pièces 10a, 10b, déformation au cours de laquelle l'énergie cinétique du choc est absorbée, au moins partiellement.

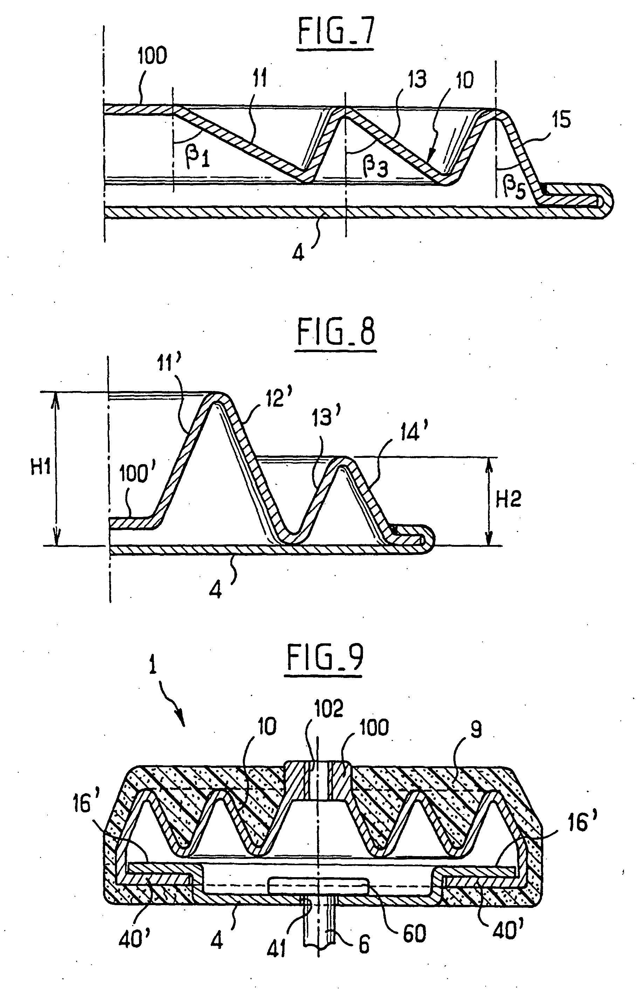

La conicité des différentes ondulations n'est pas forcément identique ; ainsi, sur la figure 7, est représentée une pièce 10 dont les éléments de paroi 11, 13 et 15 possèdent des demi-angles au sommet β₁, β₃ et - respectivement β₅ -, dont la valeur diminue de l'intérieur vers l'extérieur.

De même, la hauteur des différentes ondulations n'est pas forcément identique.

Dans la variante illustrée sur la figure 8, qui possède un repli de moins que le mode de réalisation précédent, la partie centrale 100' se trouve à proximité de l'embase 4 ; la circonvolution intérieure 11', 12', possède une longueur axiale - ou hauteur - **H**₁ supérieure à celle **H**₂ de la circonvolution externe 13', 14'.

L'inverse pourrait également, bien entendu, être prévu.

Dans le mode de réalisation illustré sur la figure 9, l'embase 4 présente une partie centrale légèrement renfoncée par rapport à sa zone périphérique 16'.

Le rebord de la plaque 10 est cette fois replié vers l'intérieur pour être serti contre ce rebord.

La partie centrale de l'embase 4 présente une ouverture 41 recevant, comme dans le mode de réalisation de la figure 3, un organe de fixation 6, à tête 60.

La partie centrale 100 de la pièce déformable 10 a une forme de douille en surépaisseur par rapport au reste de la paroi ; elle est percée d'un trou central taraudé 102 apte à recevoir une vis de fixation.

La pièce 10, ainsi que la partie extérieure de l'embase 4, sont enrobées, par surmoulage, dans un matériau d'habillage 9.

Il s'agit de préférence d'un matériau synthétique souple, par exemple une mousse de polyuréthane.

Son rôle est d'améliorer l'aspect visuel du dispositif (en cachant de la vue les replis de la pièce 10) et aussi de réduire les risques de blessures en cas d'impact avec les occupants, notamment dans le cas d'un retournement du véhicule.

La zone centrale 100, et son trou de fixation 102 restent apparents, si bien que la présence de l'habillage 9 ne contrarie pas le montage du dispositif.

Par ailleurs, en raison de sa souplesse et de sa faible résistance, le matériau de remplissage 9 n'a pas d'incidence sur le phénomène de déformation de la pièce 10.

Un tel dispositif peut naturellement être monté en série sur un véhicule automobile.

Il peut également être fourni comme accessoire en post-équipement, ou remplaçage facilement ; il suffit pour cela de l'intercaler entre le montant 5 et l'élément de renvoi 2. Sa faible épaisseur ne modifie pratiquement pas la position d'ancrage de l'élément de renvoi.

En outre, ce genre de dispositif peut être installé en d'autres emplacements sur une ceinture de sécurité, en particulier entre le pédoncule qui équipe la boucle **Z**_{**3**} et le point d'ancrage bas, côté tunnel, **Z**_{**4**}**.**

De même, le dispositif peut être monté sur les différents points d'ancrage des ceintures de sécurité, ce qui n'est pas toujours le cas avec les dispositifs limiteurs d'effort de type connu.

Comme déjà dit, un tel dispositif peut trouver des applications très variées, lorsqu'il s'agit d'apporter sur une ligne d'effort un élément de sécurité qui limite la force susceptible de transite r sur cette ligne.

On peut penser par exemple à l'utiliser pour limiter les chocs d'attelage de violence exceptionnelle de certains mobiles tractés tels que des wagons de train, des bateaux remorqués, ou des charges suspendues par une élingue à un hélicoptère.

De tels chocs correspondent à des efforts importants et de courte durée, qui peuvent apparaître de manière imprévue, risquant d'endommager le mobile - wagon ou bateau par exemple - voire de le déstabiliser - hélicoptère -.

Ces efforts intempestifs et violents peuvent être dûs soit à une erreur humaine, par exemple accélération brutale de la motrice d'un train, qui provoque un à-coup dans la structure des wagons et de leur attache, soit des phénomènes naturels non maîtrisés, par exemple rafales de vent surchargeant brutalement l'élingue pour le cas d'un hélicoptère, effet de la houle provoquant des surtensions dans le câble reliant le bateau remorqué ou bateau remorqueur.

Le dispositif remplit toujours sa fonction de limiteur d'effort, même pour un effort désaxé par rapport à son axe de définition géométrique, la pièce ondulée se déformant alors dissysmétriquement en conséquence, tout en absorbant correctement l'énergie du choc.

## Revendications

1. Dispositif limiteur d'effort en traction, apte à se déplier progressivement lorsqu'on lui applique en sa zone centrale (100) un effort axial (F, T), ou approximativement axial (G), dépassant un seuil déterminé, qui comporte une pièce plate et déformable (10), formée d'une succession d'ondulations (11, 12, 13, 14, 15), **caractérisé par le fait que** lesdites ondulations sont concentriques, ou approximativement concentriques, et entourent la zone centrale (100) de la pièce plate et déformable.

2. Dispositif selon la revendication 1, **caractérisé par le fait que** les ondulations (11, 12, 13, 14, 15) sont centrées sur un axe (XX'), dit axe de traction.

3. Dispositif selon la revendication 1 ou 2, **caractérisé par le fait que** ladite pièce est fixée à une embase (4) perpendiculaire à l'axe de traction (XX').

4. Dispositif selon la revendication 2 ou 3, **caractérisé par le fait qu'**il comporte des moyens (6, 60) de fixation de l'embase (4) à un support.

5. Dispositif selon la revendication 4, **caractérisé par le fait que** lesdits moyens (6, 60) autorisent la libre rotation de l'embase (4) autour de l'axe de traction (XX').

6. Dispositif selon l'une des revendications 1 à 5, **caractérisé en ce qu'**il comporte un organe transmetteur d'effort (7, 70) solidaire de la zone centrale (100).

7. Dispositif selon l'une des revendications 1 à 6, **caractérisé par le fait que** ladite pièce déformable (10) est en métal embouti, par exemple en acier.

8. Dispositif selon l'une des revendications 1 à 7, **caractérisé par le fait que** les ondulations ont des parois évasées, par exemple tronconiques, dont le sens d'évasement axial est alterné d'une paroi à la paroi voisine.

9. Dispositif selon l'une des revendications 1 à 8, **caractérisé par le fait que** lesdites ondulations ont un contour circulaire.

10. Dispositif selon l'une des revendications 1 à 8, **caractérisé par le fait que** lesdites ondulations ont un contour ovale.

11. Dispositif selon l'une des revendications 1 à 8, **caractérisé par le fait que** lesdites ondulations ont un contour polygonal.

12. Dispositif selon l'une des revendications 1 à 11, **caractérisé par le fait que** ladite pièce déformable (10) est noyée extérieurement dans un matériau souple (9), par exemple en mousse synthétique.

13. Dispositif limiteur d'effort en traction constitué de deux dispositifs (1a, 1b) conformes à l'une des revendications 1 à 12 et munis d'une embase (4a, 4b) fixés l'un à l'autre, dos-à-dos, par leurs embases (4a, 4b).

14. Dispositif selon l'une des revendications 1 à 13, **caractérisé par le fait qu'**il est utilisé pour équiper la ceinture de sécurité (Z) d'un véhicule, notamment automobile.

15. Dispositif selon la revendication 14, qui comporte une embase (4) conformément à la revendication 3, **caractérisé par le fait que** ladite embase (4) est fixée sur un montant (5) de la carrosserie du véhicule, tandis que l'élément de renvoi (2) de sangle (3) est fixé à ladite zone centrale (100) de la pièce déformable (10).

16. Dispositif selon la revendication 14, **caractérisé par le fait qu'**il est destiné à être placé entre le point d'ancrage bas (Z₄) et la partie femelle de la boucle (Z₃), aux places avant ou arrière.

17. Dispositif selon l'une des revendications 1 à 13, **caractérisé par le fait qu'**il est destiné à être monté sur un organe d'attelage, tel qu'un câble (8), ou un tirant.

## Patentansprüche

1. Vorrichtung für die Begrenzung von Zugkräften, die sich schrittweise entfalten kann, wenn man in ihrem zentralen Bereich (100) eine axiale Kraft (F, T) oder eine annähernd axiale Kraft (G) beaufschlagt, die einen bestimmten Schwellenwert übersteigt, und die ein flaches verformbares Teil (10) aufweist, das aus einer Reihe von Wellenlinien (11, 12, 13, 14, 15) besteht,
**dadurch gekennzeichnet, dass**
diese Wellenlinien konzentrisch oder annähernd konzentrisch zueinander liegen und um den zentralen Bereich (100) des flachen verformbaren *Teils* angeordnet sind.

2. Vorrichtung nach Anspruch 1,
**dadurch gekennzeichnet, dass**
die Wellenlinien (11, 12, 13, 14, 15) auf eine als Zugachse bezeichnete Achse (XX') zentriert sind.

3. Vorrichtung nach einem der Ansprüche 1 oder 2,
**dadurch gekennzeichnet, dass**
dieses Teil an einer Fußfläche (4) befestigt ist, die senkrecht zu der Zugachse (XX') angeordnet ist.

4. Vorrichtung nach einem der Ansprüche 2 oder 3,
**dadurch gekennzeichnet, dass**
sie Mittel (6, 60) für die Befestigung der Fußfläche (4) an einer Halterung aufweist.

5. Vorrichtung nach Anspruch 4,
**dadurch gekennzeichnet, dass**
diese Mittel (6, 60) eine freie Drehung der Fußfläche (4) um die Zugachse (XX') ermöglichen.

6. Vorrichtung nach einem dex Ansprüche 1 bis 5,
**dadurch gekennzeichnet, dass**
sie ein Organ (7, 70) für die Übertragung von Kräften aufweist, das mit dem zentralen Bereich (100) fest verbunden isf.

7. Vorrichtung nach einem der Ansprüche 1 bis 6,
**dadurch gekennzeichnet, dass**
das verformbare Teil (10) aus einem tiefgezogenen Metall besteht, wie zum Beispiel aus Stahl.

8. Vorrichtung nach einem der Ansprüche 1 bis 7,
**dadurch gekennzeichnet, dass**
die Wellenlinien konisch erweiterte Wände, wie zum Beispiel kegelstumpfartige Wände besitzen, deren axiale Richtung der Aurweitung zwischen den benachbarten Wänden abwechselt.

9. Vorrichtung nach einem der Ansprüche 1 bis 8,
**dadurch gekennzeichnet, dass**
diese Wellenlinien ein kreisförmiges Außenprofil haben.

10. Vorrichtung nach einem der Ansprüche 1 bis 8,
**dadurch gekennzeichnet, dass**
diese Wellenlinien ein ovales Außenprofil haben.

11. Vorrichtung nach einem der Ansprüche 1 bis 8,
**dadurch gekennzeichnet, dass**
diese Wellenlinien ein polygonales Außenprofil haben.

12. Vorrichtung nach einem der Ansprüche 1 bis 11,
**dadurch gekennzeichnet, dass**
das verformbare Teil (10) mit seiner Außenseite in ein weiches Material (9) eingelassen ist, wie zum Beispiel in einen synthetischen Schaum.

13. Vorrichtung für die Begrenzung von Zugkräften, die aus zwei Vorrichtungen (1a, 1b) nach einem der Ansprüche 1 bis 12 besteht,
**dadurch gekennzeichnet, dass**
sie mit einer Fußfläche (4a, 4b) ausgestattet und mit Hilfe ihrer Fußflächen (4a, 4b) Rücken an Rücken befestigt ist.

14. Vorrichtung nach einem der Ansprüche 1 bis 13,
**dadurch gekennzeichnet, dass**
sie für die Ausrüstung eines Sicherheitsgurtes (Z) eines Fahrzeugs, und insbesondere eines Kraftfahrzeugs verwendet wird.

15. Vorrichtung nach Anspruch 14, die eine Fußfläche (4) nach Anspruch 3 aufweist,
**dadurch gekennzeichnet, dass**
diese Fußfläche (4) an einer Strebe (5) der Karosserie des Fahrzeugs befestigt ist, und dass der Rückzug (2) des Gurtes (3) an dem zentralen Bereich (100) des verformbaren Teils (10) befestigt wird.

16. Vorrichtung nach Anspruch 14,
**dadurch gekennzeichnet, dass**
sie zwischen dem unteren Verankerungspunkt (Z₄) und dem Einsteckteil des Gurtes (Z₃) an den vorderen oder hinteren Positionen angeordnet wird.

17. Vorrichtung nach einem der Ansprüche 1 bis 13,
**dadurch gekennzeichnet, dass**
sie an einer Kupplungsvorrichtung, wie zum Beispiel einem Kabel (8) oder einer Spannstange befestigt wird.

## Claims

1. A device for limiting a traction load and suitable for unfolding progressively when an axial or approximately axial load (F, T, G) exceeding a determined threshold is applied to a central zone (100) thereof, the device comprising a flat and deformable piece (10) formed by a succession of corrugations (11, 12, 13, 14, 15), the device being **characterized by** the fact that said corrugations are concentric, or approximately concentric, and surround the central zone (100) of the flat and deformable piece.

2. A device according to claim 1, **characterized by** the fact that the corrugations (11, 12, 13, 14, 15) are centered on a "traction" axis (XX').

3. A device according to claim 1 or claim 2, **characterized by** the fact that said piece is fixed to a base (4) extending perpendicularly to the traction axis (XX').

4. A device according to claim 2 or claim 3, **characterized by** the fact that it includes means (6, 60) for fixing the base (4) to a support.

5. A device according to claim 4, **characterized by** the fact that said means (6, 60) allow the base (4) to rotate freely about the traction axis (XX').

6. A device according to any one of claims 1 to 5, **characterized in that** it includes a load-transmitting member (7, 70) secured to the central zone (100).

7. A device according to any one of claims 1 to 6, **characterized by** the fact that said deformable piece (10) is made of stamped metal, e.g. steel.

8. A device according to any one of claims 1 to 7, **characterized by** the fact that the corrugations have flared walls, e.g. frustoconical walls, flaring axially in directions that alternate from one wall to the adjacent wall.

9. A device according to any one of claims 1 to 8, **characterized by** the fact that said corrugations are circular in outline.

10. A device according to any one of claims 1 to 8, **characterized by** the fact that said corrugations are oval in outline.

11. A device according to any one of claims 1 to 8, **characterized by** the fact that corrugations are polygonal in outline.

12. A device according to any one of claims 1 to 11, **characterized by** the fact that said deformable piece (10) is embedded externally in flexible material (9), e.g. synthetic foam.

13. A device for limiting traction load and constituted by two devices (1a, 1b), according to any one of claims 1 to 12 and having respective bases (4a, 4b), the devices being fixed to each other, back to back, via their bases (4a, 4b).

14. A device according to any one of claims 1 to 13, **characterized by** the fact that it is used for fitting a safety belt (Z) in a vehicle, in particular a car.

15. A device according to claim 14, including a base (4) according to claim 3, **characterized by** the fact that said base (4) is fixed to an upright (5) of the vehicle bodywork, while the safety belt (3) fixing member (2) is fixed to said central zone (100) of the deformable piece (10).

16. A device according to claim 14, **characterized by** the fact that it is for placing between the low anchoring point (Z₄) and the female portion of the buckle (Z₃) for front or rear seats.

17. A device according to any one of claims 1 to 13, **characterized by** the fact that it is designed to be mounted on a coupling member, such as a cable (8) or a pull rod.
